# EUROPÄISCHE PATENTSCHRIFT

(11) **EP 1 241 486 B1**
(45) Veröffentlichungstag und Bekanntmachung des Hinweises auf die Patenterteilung: **08.12.2004**
(21) Anmeldenummer: 02004856.7
(22) Anmeldetag: 04.03.2002
(51) Int. Cl.: G01S 7/497, G01S 7/495, G01S 7/481, F41G 7/22

(54) **Vorrichtung zum Ausrichten eines Laserstrahls auf ein Ziel**
Device for aligning a laser beam to a target
Dispositif d'alignement d'un rayon laser à une cible

(30) Priorität: 12.03.2001 DE 10112176
(43) Veröffentlichungstag der Anmeldung: 18.09.2002
(73) Patentinhaber: Bodenseewerk Gerätetechnik GmbH, 88662 Überlingen (DE)
(72) Erfinder: Raab, Michael, Dr., 88682 Salem-Neurach (DE)
(74) Vertreter: Diehl Patentabteilung

(56) Entgegenhaltungen:
- DE-A- 19 720 832
- FR-A- 2 689 252
- GB-A- 2 337 172
- US-A- 5 600 434
- US-A- 5 742 384
- US-B1- 6 194 723

## Beschreibung

Die Erfindung betrifft eine Vorrichtung zum Ausrichten eines Laserstrahls auf ein Ziel, enthaltend einen auf Zielstrahlung ansprechenden Bildsensor, abbildende optische Mittel, die eine Mittenausblendung aufweisen, zur Abbildung der Zielstrahlung auf den Bildsensor und einen Laser zur Erzeugung eines Laserstrahlsder durch die Mittenausblendung der abbildenden optischen Mittel hindurchtritt

### Stand der Technik

Unter DIRCM (Directed Infra-Red Counter-Measures) versteht man Gegenmaßnahmen gegen anfliegende Raketen mittels Täuschen durch Einwirkung gerichteter Infrarot-Störstrahlung, etwa eines Lasers, auf den Infrarot-Suchkopf des angreifenden Flugkörpers. Voraussetzung dafür ist das Zusammenspiel mit einem entsprechenden Aufldärungs- und Warnsystem (MAWS=Missile Approach Warner), das anfliegende Rakenten als solche erkennt und das Störsystem entsprechend einweist. Das Aufklärungssystem umfaßt insbesondere einen Infrarotdetektor mit einer Bildverarbeitung. Die Bildverarbeitung erkennt anfliegende Raketen. Das Störsystem seinerseits übernimmt und verfolgt die Position des Angreifers und täuscht ihn schließlich erfolgreich durch entsprechende, gerichtete Infrarot-Strahlung. Ein solches System kann in der zivilen Luftfahrt wie auch in Kampfflugzeugen verwendet werden.

Bekannte Störsysteme umfassen Plattformen mit zwei Achsen und zwei Aperturen für Infrarotstrahlung. Der erste Infrarotpfad dient zum Empfangen der Information zum Verfolgen des Angreifers. Der zweite Infrarotpfad dient zum Senden der Täuschsignale mittels eines Lasers. Die Pfade müssen dabei vollständig getrennt sein, damit unerwünschte Reflexionen an den optischen Bauteilen oder Streustrahlung des Lasers nicht in den Sensor gelangt und diesen stören.

Aus der EP 0 962 740 A1 ist ein Infrarot-Zielsuchkopf für Flugkörper bekannt, bei dem eine Kamera mit einem optischen Pfad schwenkbar in einem Rollrahmen angeordnet ist. Der Rollrahmen ist um eine Achse drehbar gelagert, die sich entlang der Längsachse des Flugkörpers erstreckt. Die Achsen sind mit Motoren und Winkelgebern versehen. An der Schwenkachse sind weiterhin Drehratensensoren für die Messung der inertialen Drehrate um die Schwenkachse vorgesehen. Mit Hilfe der Drehratensensoren werden Geschwindigkeitsregelschleifen und -steuerschleifen aufgebaut, die die Motoren so ansteuern, daß die Schwenkachsen entsprechend einstellbar sind. Ein Laser ist in dieser Anordnung nicht beschrieben.

Relativ zur Außenhaut eines Fluggeräts handelt es sich bei den bekannten Störsystemen um warzenähnliche Strukturen von beträchtlicher Größe (größer 15 l) und Gewicht (Gesamtgewicht größer 50 kg). Die aerodynamischen Nachteile derartiger Systeme machen sie insbesondere für Kampfflugzeug ungeeignet. Bei noch kürzeren Reaktionszeiten werden generell Konfigurationen mit deutlich geringeren Trägheitsmomenten erforderlich.

*Die FR 2 689 252 A1 zeigt eine Vorrichtung zum Ausrichten eines Laserstrahls auf ein Ziel mit einem auf Strahlung von dem Ziel und die Zielablage ansprechenden Detektor und einem abbildenden optischen System zur Abbildung des Ziels auf dem Detektor. Der Strahlengang läuft über einen Umlenkspiegel, der eine zentrale Öffnung aufweist. Diese Öffnung bildet eine Mittenausblendung des optischen Systems. Durch diese Mittenausblendung tritt gerade, entlang der optischen Achse des umgelenkten Strahlenganges ein Laserstrahl. Der Laserstrahl und das von dem Ziel zurückgeworfene Laserlicht werden über einen verstellbaren Umlenkspiegel geleitet. Der verstellbare Umlenkspiegel wird von dem zurückgeworfenen Laserlichts so gesteuert, daß der Laserstrahl das Ziel verfolgt. Dabei erfolgt eine Modulation des Laserlichts zur Erzeugung von Störlicht, welches den Sucher eines anfliegenden zielverfolgenden Flugkörpers stören soll, und von Zielverfolgungslicht, durch welches Detektorsignale zur Verstellung des verstellbaren Spiegels erzeugt werden. Störlicht und Zielverfolgungslicht werden bei der Signalverarbeitung durch ein Zeitfenster getrennt.*

### Offenbarung der Erfindung

Es ist daher Aufgabe der Erfindung, *sicherzustellen, daß der aus der Anordnung austretende Laserstrahl immer in Richtung der optischen Achse des Strahlenganges des Bildsensors ausgerichtet ist.*

*Erfindungsgemäß wird diese Aufgabe dadurch gelöst, daß*
*(a) in der Mittenausblendung ein Strahlenteiler angeordnet ist, auf den der Laserstrahl geleitet und mittels dessen der überwiegende Teil der Energie des Laserstrahls in Richtung auf das Ziel reflektiert wird,*
*(b) in der Verlägerung des einfallenden Laserstrahls hinter de m Strahlenteiler ein Spiegel angeordncet ist, welcher den durch den Strahlenteiler hindurchgegangenen Teil des Laserstrahls auf den Strahlenteiler zurückwirft, wobei dieser zurückgeworfene Teil von dem Strahlenteiler wiederum überwiegend auf den Bildsensor reflektiert* wird *wobei die von dem Laserstrahl beaufschlagte Stelle des Bildsensors ein Maβ für die Richtung des in Richtung auf das Ziel reflektierten Laserstrahls relativ zu den abbildenden optischen Mitteln darstellt, und*
*(c) Mittel zur Ermittlung* der Abweichung *der Richtung des Laserstrahls relativ zu dem abbildenden optischen System von einem Sollwert* aus *dem Signal des Bildsensors, das von dem durch den Strahlenteiter unmittelbar auf den Bildsensor geleiteten Teil des Laserstrahls erzeugt wird, und Mittel zur Korrektur der Richtung des Laserstrahls auf den Sollwert vorgesehen sind.*

Ausgestaltungen der Erfindung sind Gegenstand der Unteransprüche.

Ein Ausfühnmgsbeispiel ist nachstehend unter Bezugnahme auf die beigefügten Zeichnungen näher erläutert.

### Kurze Beschreibung der Zeichnungen

- Fig.1: zeigt den prinzipiellen Aufbau eines Störsystems
- Fig.2: zeigt einen Querschnitt durch einen Sucher mit einem passiven und einem aktiven Infrarot-Kanal

### Beschreibung eines Ausführungsbeispiels

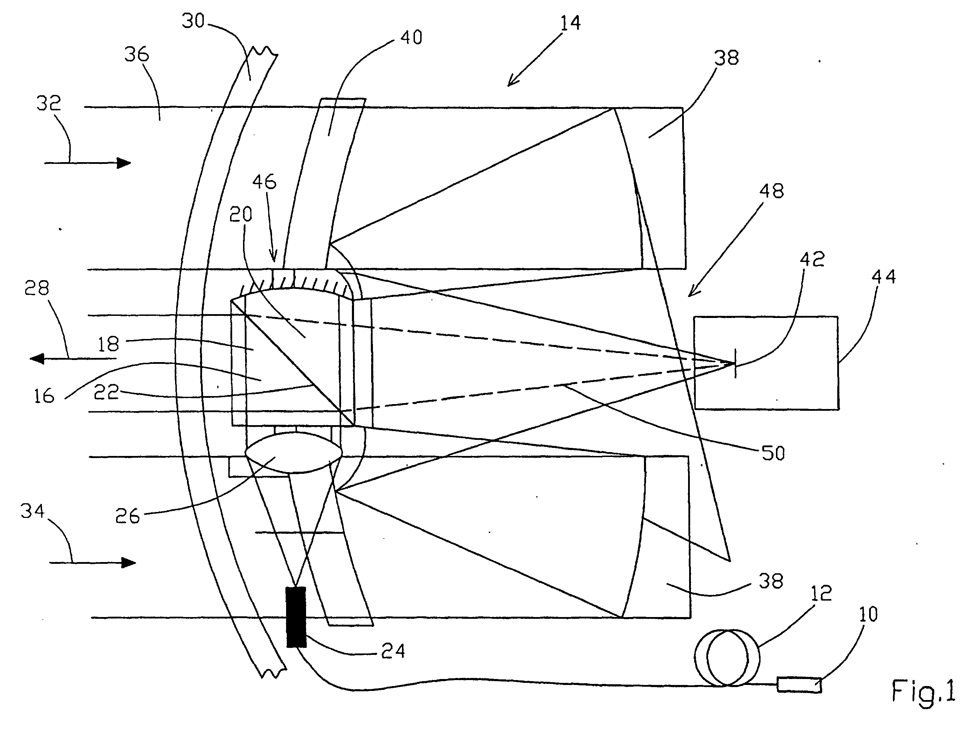

In Fig.1 ist mit 10 ein Laser bezeichnet. Das Laserlicht des Lasers 10 wird in einen Infrarot-Lichtleiter 12 ("optisches Flexlead") eingekoppelt und in eine Sucher-DIRCM-Anordnung 14 geleitet. In der Mitte der Anordnung 14 ist ein Strahlteiler 16 angeordnet. Der Strahlteiler 16 besteht aus zwei entlang einer Diagonale zu einem Würfel zusammengesetzten Hälften 18 und 20. Zwischen den beiden Hälften 18 und 20 befindet sich ein 5-10µm breiter Luftspalt 22. Das Laserlicht aus der Fiber 12 wird über eine Fiberoptik 24 und eine AR-beschichtete Korrektorlinse 26 auf den Strahlteiler 16 geleitet.

Der größte Teil des Laserlichts wird an dem Spalt 22 totalreflektiert und verläßt die Anordnung 14 in Richtung des Pfeils 28 durch einen Dom 30. Die vom Ziel ausgesendete Infrarotstrahlung 36 in Richtung der Pfeile 32 und 34 tritt durch den Dom 30 und fällt auf einen Konkavspiegel 38. An dem Spiegel 38 wird die Strahlung in Richtung auf einen Konvexspiegel 40 reflektiert und von dort auf einen Fokal-Plane-Array-Detektor (FPA) 42, der in einem Dewar 44 gekühlt wird, abgebildet.

In dem Spiegel 40 befindet sich mittig ein Durchgang 46. In dem Spiegel 38 befindet sich mittig ein Durchgang 48. Ein geringer Teil 50 des Laserlichts, weniger als 0,0001%, wird an dem Strahlteiler 16 entgegengesetzt zur Strahlrichtung 26 des übrigen Laserlichts in Richtung auf den Detektor 42 reflektiert. Dabei durchtritt es die Durchgänge 46 und 48 der optischen Elemente im Abbildungsstrahlengang der Infrarot-Kamera.

Man erkennt deutlich, daß die Apertur in zwei Teile aufgeteilt ist. Der erste Teil sitzt konzentrisch um den zweiten Teil und bildet die Eintrittsapertur des Detektors 42. Der zweite Teil bildet die Mittenausblendung und dient zum einen als Strahlengang für den Korrekturstrahl 50 des Lasers und zum anderen zur Aufnahme des Strahlteilers 16, über den der Laserstrahl in die Anordnung 14 eingekoppelt wird. Der Durchgang 46 erlaubt die Abbildung eines kleinen Teils der Laserleistung vermöge Spiegel 17 auf den Detektor und wirkt gleichzeitig als Kaltspiegel in diesem Winkelbereich und erhöht damit die Kaltblendeneffektivität.

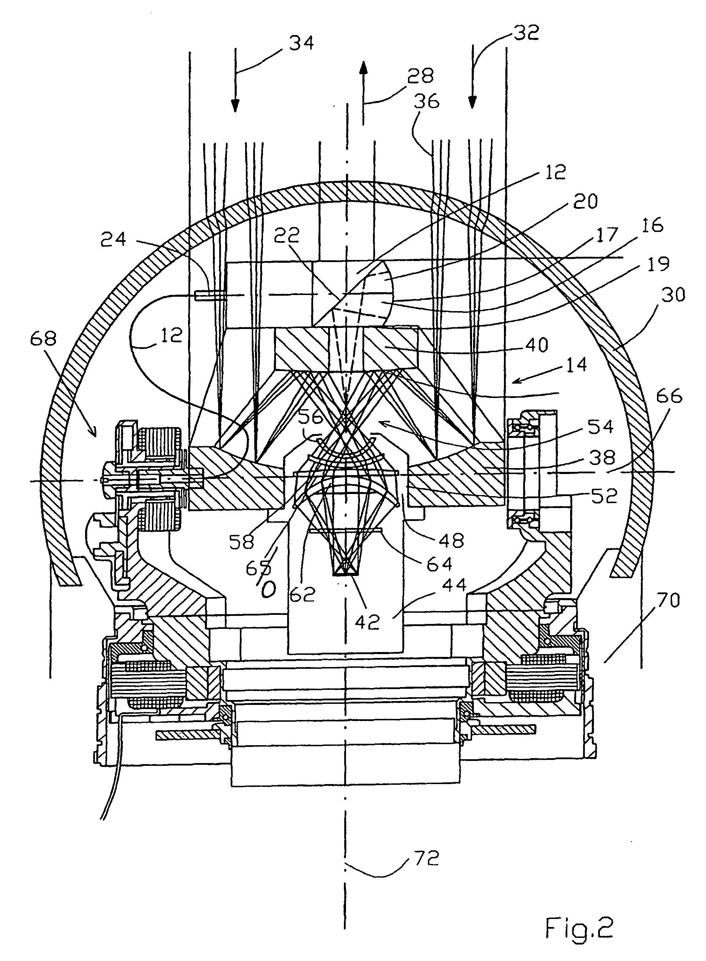

In Fig. 2 ist diese Anordnung nochmals dargestellt, wobei gleiche Bezugszeichen gleiche Bauteile bezeichnen.

Hier ist auch der Strahlengang im Strahlteiler nochmals deutlicher dargestellt. Der transmittierte geringe Strahlanteil durchläuft den Spalt und wird an der gekrümmten Seitenfläche 17 in Richtung auf die Seitenfläche 19 gelenkt. Dort verläßt er den Strahlteilerwürfel. Die Kaltblendeneffektivität für den Detektor durch die Verspiegelung an der Fläche 17 des Laserrückkanals erhöht.

Zwischen dem zweiten abbildenden Spiegel 40 und dem Detektor 42 ist eine Vermittlungsoptik 52 vorgesehen. Die Vermittlungsoptik 52 bildet das Zwischenbild 54 auf den Detektor 42 ab. Sie besteht aus Linsen 56, 58, 60 und 62, deren Krümmungen so ausgebildet sind, daß Abbildungsfehler korrigiert werden. Vor dem Detektor 42 ist eine zusätzliche Kaltblende 64 vorgesehen. Durch die konzentrische Strahlführung wird Parallaxe vermieden.

Die gesamte Anordnung 14 ist drehbar um eine in Fig.2 horizontale Drehachse 66 (Elevationsachse) angeordnet. Die Drehachse 66 ist in einer Anordnung 68 gelagert. Die Anordnung 68 umfasst in üblicher Weise einen Torquer, Drehratensensor und Winkelgeber zur Drehung der Anordnung 14 um einen definierten Winkel. Diese Art der Lagerung und Steuerung von Drehachsen ist bekannt und wird daher nicht näher beschrieben.

Die Anordnung ist weiterhin um eine in Fig.2 vertikale Drehachse 72 (Azimutachse) drehbar angeordnet. Die Drehachse 72 erfolgt mittels einer Anordnung 70 in üblicher Weise und wird ebenfalls nicht näher beschrieben.

Die Drehung der Strahlengänge des Lasers 10 und des Detektors 42 um die beiden Achsen 66 und 72 ermöglicht die gleichzeitige Ausrichtung in jeder Richtung einer Hemisphäre. Die Positionierung und Stabilisierung der Blickrichtung im Halbraum geschieht innerhalb weniger 0,1s. Die Positioniergeschwindigkeit kann durch z.B. entsprechende Torquer-Auslegung weiter erhöht werden. Die Integration des DIRCM-Kopfes ist am Flügel eines Kampfflugzeuges möglich.

Durch die Verwendung eines Lichtleiters zur Einkopplung des Lasers in die Anordnung haben Instabilitäten des Winkels des Laserstrahls, die z.B. durch eine Verkippung eines Resonatorspiegels auftreten können, keine Auswirkungen auf die Ausrichtung des ausgehenden Laserstrahls.

## Patentansprüche

1. Vorrichtung zum Ausrichten eines Laserstrahls (28) auf ein Ziel, enthaltend einen auf Zielstrahlung ansprechenden Bildsensor (42), abbildende optische Mittel (38,40,56,60,62), die eine Mittenausblendung aufweisen, zur Abbildung der Zielstrahlung (32,24) auf den Bildsensor (42) und einen Laser (10) zur Erzeugung eines Laserstrahls, der durch die Mittenausblendung der abbildenden optischen Mittel (38,40,56,60,62) hindurchtritt, **dadurch gekennzeichnet, daß**
(a) in der Mittenausblendung ein Strahlenteiler (16) angeordnet ist, auf den der Laserstrahl geleitet und mittels dessen der überwiegende Teil der Energie des Laserstrahls in Richtung auf das Ziel reflektiert wird,
(b) in der Verlängerung des einfallenden Laserstrahls hinter dem Strahlenteiler (16) ein Spiegel (17) angeordnet ist, welcher den durch den Strahlenteiler (16) hindurchgegangenen Teil des Laserstrahls auf den Strahlenteiler (16) zurückwirft, wobei dieser zurückgeworfene Teil von dem Strahlenteiler (16) wiederum überwiegend auf den Bildsensor (42) reflektiert wird, wobei die von dem Laserstrahl beaufschlagte Stelle des Bildsensors (42) ein Maß für die Richtung des in Richtung auf das Ziel reflektierten Laserstrahls relativ zu den abbildenden optischen Mitteln (38,40, 56,58,60,62) darstellt, und
(c) Mittel zur Ermittlung der Abweichung der Richtung des Laserstrahlsrelativ zu dem abbildenden optischen System von einem Sollwert aus dem Signal des Bildsensors (42), das von dem durch den Strahlenteiler unmittelbar auf den Bildsensor geleiteten Teil des Laserstrahls erzeugt wird, und Mittel zur Korrektur der Richtung des Laserstrahls auf den Sollwert vorgesehen sind.

2. Vorrichtung nach Anspruch 1, **dadurch gekennzeichnet, daß** der Bildsensor (42) ein infrarotempfindliches Detektorarray ist.

3. Vorrichtung nach Anspruch 1, **dadurch gekennzeichnet, daß** der Laser (10) ein Infrarotlaser ist.

4. Vorrichtung nach einem der Ansprüche 1 bis 3, **dadurch gekennzeichnet daß** der auf den Bildsensor (42) fallende Strahlenanteil (50) weniger als 0,01%der Intensität des Laserstrahls beträgt.

5. Vorrichtung nach Anspruch 4, **dadurch gekennzeichnet, daß** der Strahlenteiler (16) ein Strahlenteiler mit frustrierter totaler interner Reflexion ist.

6. Vorrichtung nach einem der Ansprüche 1 bis 5, **dadurch gekennzeichnet, daß** zum Einkoppeln des Laserstrahls ein Lichtleiter (12) vorgesehen ist, über welchen der Laserstrahl auf den Strahlenteiler (16) geleitet wird.

## Claims

1. A device for directing a laser beam (28) at a target, including an image sensor (42) which responds to target radiation, imaging optical means (38,40,56,60,62), which have a central stop, for forming an image of the target radiation (32, 24) on the image sensor (42) and a laser (10) for generating a laser beam which passes through the central stop of the imaging optical means (38,40,56,60,62), **characterized in that**
(a) disposed in the central stop is a beam splitter (16), to which the laser beam is directed and by means of which the major part of the energy of the laser beam is reflected towards the target,
(b) disposed in the extension of the incident laser beam after the beam splitter (16) is a mirror (17) which reflects the portion of the laser beam which has passed through the beam splitter (16) back to the beam splitter (16), this reflected portion in turn being reflected from the beam splitter (16) primarily to the image sensor (42) and the point on the image sensor (42) acted on by the laser beam constituting a measurement for the direction of the laser beam reflected towards the target relative to the imaging optical means (38,40,56,58,60,62), and
(c) means are provided for determining the deviation of the direction of the laser beam relative to the imaging optical system from a desired value from the signal of the image sensor (42) which is generated by the portion of the laser beam directly transmitted through the beam splitter to the image sensor, and means are provided for adjusting the direction of the laser beam to the desired value.

2. A device according to Claim 1, **characterized in that** the image sensor (42) is an infrared-sensitive detector array.

3. A device according to Claim 1, **characterized in that** the laser (10) is an infrared laser.

4. A device according to one of Claims 1 to 3, **characterized in that** the proportion (50) of the beam incident on the image sensor (42) is less than 0.01% of the intensity of the laser beam.

5. A device according to Claim 4, **characterized in that** the beam splitter (16) is a beam splitter with frustrated total internal reflection.

6. A device according to one of Claims 1 to 5, **characterized in that,** for coupling-in of the laser beam, a waveguide (12) is provided by way of which the laser beam is directed to the beam splitter (16).

## Revendications

1. Dispositif pour orienter un rayon laser (28) sur une cible, contenant un capteur d'image (42) réagissant à un rayonnement de la cible, des moyens optiques (38, 40, 56, 60, 62) de reproduction qui comportent un diaphragme au centre, pour reproduire le rayonnement de la cible (32, 24) sur le capteur d'image (42), ainsi qu'un laser (10) pour produire un rayon laser qui passe à travers le diaphragme au centre des moyens optiques (38, 40, 56, 60, 62) de reproduction, **caractérisé en ce que**
(a) dans le diaphragme au centre est disposé un diviseur de rayon (16) sur lequel est dirigé le rayon laser et au moyen duquel la majeure partie de l'énergie du rayon laser est réfléchie dans la direction de la cible,
(b) dans le prolongement du rayon laser incident, derrière le diviseur de rayon (16), est disposé un miroir (17) qui réfléchit, sur le diviseur de rayon (16), la partie du rayon laser qui a traversé le diviseur de rayon (16), cette partie réfléchie par le diviseur de rayon (16) étant à nouveau principalement réfléchie sur le capteur d'image (42), le point du capteur d'image (42), sollicité par le rayon laser, constituant un critère de la direction du rayon laser réfléchi en direction de la cible, par rapport aux moyens optiques (38, 40, 56, 58, 60, 62) de reproduction, et
(c) il est prévu des moyens pour déterminer l'écart de la direction du rayon laser par rapport au système optique de reproduction par rapport à une valeur de consigne provenant du signal du capteur d'image (42), qui est produit par la partie du rayon laser guidée par le diviseur de rayon directement sur le capteur d'image, ainsi que des moyens pour corriger la direction du rayon laser sur la valeur de consigne.

2. Dispositif selon la revendication 1, **caractérisé en ce que** le capteur d'image (42) est un ensemble de détection réagissant à la lumière infrarouge.

3. Dispositif selon la revendication 1, **caractérisé en ce que** le laser (10) est un laser infrarouge.

4. Dispositif selon l'une des revendications 1 à 3, **caractérisé en ce que** la proportion de rayons (50) parvenant sur le capteur d'image (42) est inférieure à 0,01 % de l'intensité du rayon laser.

5. Dispositif selon la revendication 4, **caractérisé en ce que** le diviseur de rayon (16) est un diviseur de rayon avec réflexion interne totale frustrée.

6. Dispositif selon l'une des revendications 1 à 5, **caractérisé en ce que** pour l'introduction du rayon laser il est prévu un guide optique (12) par lequel le rayon laser est guidé sur le diviseur de rayon (16).
